# FASCICULE DE BREVET EUROPEEN

(11) **EP 0 342 065 B1**
(45) Date de publication et mention de la délivrance du brevet: **12.04.1995**
(21) Numéro de dépôt: 89400184.1
(22) Date de dépôt: 23.01.1989
(51) Int. Cl.: A01B 31/00, A01B 59/044, A01B 29/00, A01B 63/14

(54) **Machine de reprise de labour**
Maschine zum Nacharbeiten von gepflügtem Land
Implement for treating ploughed land

(30) Priorité: 11.05.1988 FR 8806741; 19.01.1989 FR 8900978
(43) Date de publication de la demande: 15.11.1989
(73) Titulaire: Hamot, Michel, F-02220 Braine (Aisne) (FR)
(72) Inventeur: Hamot, Michel, F-02220 Braine (Aisne) (FR)
(74) Mandataire: Duthoit, Michel

(56) Documents cités:
- EP-A- 0 199 656
- DE-C- 698 144
- FR-A- 739 336
- FR-A- 1 339 947
- FR-A- 2 618 287
- GB-A- 738 388
- GB-A- 2 158 019
- US-A- 1 364 007
- US-A- 2 886 906
- US-A- 3 261 118

## Description

L'invention est relative à une machine de reprise de labour qui trouvera notamment son application dans le domaine agricole.

Dans l'agriculture, l'hiver est mis à profit pour laisser reposer le sol. Ce repos a une action extrêmement bénéfique sur la terre en particulier il permet une reconstitution superficielle du sol. Cette reconstitution favorise les cultures futures.

Avant cette période de repos hivernal, le cultivateur doit préparer la terre, généralement il pratique un labourage du champ. La terre est retournée est est creusée par des sillons.

A la sortie de l'hiver, dans les régions où il gèle suffisamment, les sols labourés se présentent avec la meilleure structure interne possible. Actuellement, les appareils de reprise du sol au printemps sur labours hivernés qui sont proposés, ont tous en commun de chercher à réaliser simultanément un ameublissement plus ou moins profond, un nivellement et parfois un tassement avec obtention d'un "lit de semence" en surface.

La "reprise" avec ameublissement plus ou moins profond et plus ou moins énergique traditionnellement pratiquée a pour but :
- de réchauffer le sol par rupture de la capillarité dans la couche de sol travaillée (effet favorable, à condition toutefois qu'il ne pleuve pas entre cette opération et l'ensemencement du terrain ou que l'effet de dessication obtenu soit bien maitrisé),
- de réaliser une certaine destruction des mauvaises herbes,
- de réaliser un "lit de semence",
- de tenter de réaliser un décompactage et un ameublissement des zones ou la structure favorable a été détruite par le tassement dû aux roues du ou des tracteurs.

Si on reprend les différents objectifs précédemment cités, on constate qu'il est possible d'en faire l'économie en effet :
- il n'est pas vraiment nécessaire de "réchauffer le sol",
- la destruction des adventices est maintenant assurée chimiquement,
- les reprises plus ou moins profondes ne sont rendues nécessaires qu'en raison du tassement excessif occasionné par le passage des roues du ou des tracteurs. L'effet néfaste sur la structure du sol est d'autant plus sensible qu'à cette saison les terres sont gorgées d'eau en profondeur et que dans la pratique, les agriculteurs sont conduits à intervenir alors que seules les couches superficielles sont suffisamment "ressuyées".

Pour y remédier, la tendance actuelle est d'abandonner les opérations successives multiples traditionnelles telles que passages de herses, vibroculteurs, rouleaux, herses, etc... occasionnant chaque fois un passage de tracteur pour les remplacer par des combinaisons d'outils ou des outils animés par la prise de force du tracteur capable de réaliser le lit de semence en un seul passage. Ceci permet de ne faire que deux passages de tracteur (préparation puis semis) ou un seul (outil animé et semoir simultanément.

Mais ces différents outils ou combinaisons d'outils ont en commun de travailler sur de relativement faibles largeurs; en effet: soit ils exigent de la puissance (outils animés) soit ils exigent de la vitesse (combinaison d'outils). Les plus larges outils animés ne vont guère au-delà de quatre mètres, exigeant alors au moins 120 CV, quant aux combinaisons d'outils, elles vont rarement au-delà de six mètres pour des puissances nécessaires qui peuvent alors dépasser les 150 CV.

Ceci dans le meilleur des cas conduit à un tracteur de six à sept tonnes, équipé de roues jumelées et travaillant sur six mètres de large, ce qui représente deux mètres de tassement à plus de 900 gr/m² pour six mètres travaillés, dans le meilleur des cas.

Par ailleurs, la technique de travail de la terre en automne est différente, car d'une part, le labour engendre quelquefois la formation de grosses mottes de terre qui viennent se placer au-dessus du niveau du sol, et d'autre part, le travail de la terre se fait immédiatement après le labour pour éviter l'effet néfaste de la pluie.

Selon les techniques connues de culture, on laboure le terrain puis immédiatement après on passe des systèmes traditionnels tels que herses rotatives ou similaires, aptes à former le lit de semence, cette opération étant suivie immédiatement de la phase de semage. Ainsi, la pluie éventuelle à laquelle le terrain pourrait être soumis ne permet pas la formation de boue influant sur la qualité du semis.

Cependant, contrairement au travail sur labour hiverné, il a été rappelé plus haut que, notamment lors du travail en automne, on effectue les différentes opérations successivement et de préférence en un seul passage. Aussi, la machine de reprise de labour travaille dans le même sens et on attaque les sillons formés par les labours sensiblement parallèlement à leur direction, et non plus avec un angle. Par ailleurs, les mottes de terre, quelquefois très grosses, n'ayant pas subi l'hivernage, sont moins friables et sont plus difficilement émiettables.

Cela étant, on connaît du document FR-A-739.336 une pelle niveleuse automatique pour terrains, qui trouve une de ses applications dans le domaine de l'agriculture, et qui est apte à être attelée à un tracteur pour travailler la terre préalablement aux semis.

Selon ce document, pui montre les caractéristiques du préambule de la revendication 1, appareil comporte des outils de travail de la terre présentant un ensemble de coutres permettant d'ameublir la croûte de la terre, suivi d'un outil transversal égalisateur permettant de niveler le terrain en accumulant la terre émiettée par les coutres si on se trouve dans une situation de bosses ou en comblant les dépressions et creux du terrain avec la terre émiettée par les coutres préalablement dans la situation inverse. En outre, selon ce document, l'appareil comporte des moyens de soutien des outils qui déterminent le niveau moyen du sol dans la zone de travail des dits outils, des moyens de réglage de la hauteur des outils par rapport au sol, et des moyens de liaison souple reliant les dits moyens de soutien au châssis du tracteur.

Une machine proche de cette technique est également connue du document US-1.364.007 qui décrit une herse niveleuse, destinée à être attelée à un ensemble hypo-mobile et, qui est constituée de deux patins latéraux entre lesquels sont disposées une herse suivie d'une ou deux planches niveleuses.

Selon ces techniques connues, on émiette préalablement la terre au moyen de dents de herse ou de coutres puis on cherche à répartir la terre à l'aide d'un élément niveleur classique qui n'intervient qu'après une reprise du labour par les dents d'une herse ou des coutres.

Aussi, on engendre une accumulation de terre devant la planche niveleuse et on provoque une zone de frottement entre la terre émiettée et la surface du sol qui provoque inévitablement des bourrages et rend inefficace le nivelage.

On connaît également du document FR-A-1.339.947 un niveleur de terrain destiné à être attelé à un tracteur qui permet après le passage des roues d'un tracteur équipé d'un instrument agricole de combler les sillons ménagés par le passage des roues de ce tracteur.

Cet appareil est essentiellement formé par un traîneau disposé chacun derrière une roue du tracteur qui en glissant sur le sol, vient boucher les sillons creusés par les roues du tracteur.

Ce document décrit un outil de "réparation" de l'état du terrain mais en aucun cas il ne permet une reprise de labour en vue de préparer le sol aux semis.

Par ailleurs, on connaît également du document EP-A-199.656 un dispositif de report de charge du tracteur placé entre les roues de ce dernier sous le bâti afin d'effectuer une pression sur le sol par l'intermédiaire de rouleaux.

Cependant, de tels dispositifs permettent d'alléger la pression engendrée par le tracteur sur la terre mais sont des dispositifs complémentaires aux vibroculteurs et herses animées de préparation des terres traditionnellement utilisées.

On connaît également du document US-A-3.261.118 un appareil de nivellement permettant de mettre à niveau un terrain sur une très grande largeur, la structure de cet appareil permettant ce nivellement en déplaçant la terre d'un côté vers l'autre.

Pour ce, l'appareil décrit dans le document US-A-3.261.118 comprend deux tracteurs derrière lesquels est attelé un bâti supportant un racloir d'une très grande largeur. A l'avant, le bâti est maintenu et solidarisé aux tracteurs par une liaison rigide et pivotante. A l'arrière, le bâti est supporté par deux essieux à commande de relevage séparé au moyen de vérins.

En outre, la combinaison de ces différents éléments est prévue pour autoriser la mise en diagonale du racloir tant de la droite vers la gauche, ou inversement, en avançant un tracteur par rapport à l'autre, que du haut vers le bas, ou inversement en élevant ou en abaissant les essieux indépendants arrière, ce qui se répercute sur une inclinaison du bâti.

Dans ces conditions, lors de l'avancement du tracteur, l'appareil de nivellement va déplacer la terre d'un côté vers l'autre par l'intermédiaire du racloir. Cependant, il s'agit uniquement d'un travail de nivellement et on ne réalise pas un travail de la terre ni la préparation du sol aux semis, c'est-à-dire effectuer la "reprise" du labour pour émietter la terre et former un lit de semences sur un labour hiverné ou non.

Le but principal de la présente invention est de présenter une machine de reprise de labour qui est spécialisée dans sa fonction et qui se substitue aux vibroculteurs et herses animées traditionnellement utilisés.

Un des buts de la présente invention est de substituer à l'ensemble de ces diverses façons culturales, une façon de travailler nouvelle afin de réaliser un nivellement suffisant en un seul passage avec un minimum d'effort de traction.

En effet, en partant de ces constatations ci-dessus rappelées, l'objectif recherché a été de concevoir une machine destinée uniquement à niveler les sols destinés à être emblavés. Elle trouve sa meilleure application sur les sols labourés ayant bénéficiés de l'action favorable du gel, mais néanmoins, pourra être utilisée avec de très bons résultats sur des sols n'ayant pas subi de gel.

En se limitant à cet objectif, sans rechercher d'effet d'ameublissement, il a été possible de concevoir un appareil capable en un seul passage de niveler et de corriger les éventuels défauts du labour (jumelage, dérayures, etc...) en remuant un minimum de terre et en la brassant le moins possible.

La conception extrêmement simple de cette machine, sa légèreté et la très faible exigence en énergie que nécessite sa mise en oeuvre, permettent par les différentes applications qui peuvent en être faites, d'apporter une solution originale au problème de destruction des structures par les passages du tracteur.

Ainsi, les applications de la machine de la présente invention permettent de limiter suffisamment les effets de destruction de la structure interne des sols due aux passages de tracteurs, pour rendre inutile le travail d'ameublissement destiné à essayer de corriger cette compaction.

Ensuite, la puissance absorbée par la machine de l'invention est très modeste. Les avantages procurés par cette caractéristique sont très importants. L'emploi d'un tracteur de plus faible puissance peut parfaitement être envisagé. Il s'en suit qu'il s'agit d'un tracteur plus léger et en utilisant des roues étroites jumelées, il est possible de localiser le tassement du sol sur une faible surface et dans des interlignes des cultures.

Ensuite, le travail du sol peut se faire sur une grande largeur de l'ordre de 10 m même avec un tracteur de faible puissance. Le champ peut être travaillé à faible vitesse, la largeur de la machine de reprise de labour permet de combler le faible vitesse en réduisant le nombre de passages nécessaires pour couvrir la surface.

Un autre but de la présente invention est de présenter une machine de reprise de labour qui soit économique notamment sur le plan de sa fabrication. En effet, il s'agit d'une machine spécialisée dont la construction fait appel à des techniques traditionnelles. Sa longévité est assurée par le fait qu'il n'existe aucune pièce en mouvement. L'absence de motorisation est également appréciable sur le plan économique.

Ces caractéristiques permettent d'envisager un large développement de la machine de reprise de labour de la présente invention.

Un autre but de la présente invention est de proposer une variante d'un machine de reprise de labour permettant d'élargir sa plage d'utilisation et d'améliorer le travail du nivellement et d'autoriser un ameublissement du sol de la surface nivelée pour la travail sur des terres n'ayant pas subi le gel.

Un des buts de la présente invention est de proposer une machine de reprise de labour permettant d'une part de trancher la terre labourée, puis d'autre part d'obtenir un émiettage de la terre ainsi tranchée suffisant à la constitution d'un lit de semence apte à supporter le semis immédiatement après ce travail.

Un but de la présente invention est de proposer une machine de reprise de labour qui permette une telle préparation du terrain sur une largeur importante à chaque passage sans nécessiter de puissance de tracteur surabondante malgré le réalisation de toutes les étapes en un seul passage.

Cela étant, il a été remarqué que le simple nivellement du sol est suffisant pour réaliser un semis mais, dans la plupart des cas, il est nécessaire de réaliser, en plus, un "rappuyage" du sol pour préparer le semis, plus ou moins important, suivant les cas de figure.

Un autre but de la présente est de présenter une machine de reprise de labour, qui permet en outre de réaliser simultanément un report de charge modulable d'une partie de la masse du tracteur sur la partie arrière de la dite machine de reprise de labour.

Par ailleurs, un autre but de la présente invention est de proposer une machine de reprise de labour équipant un tracteur à roues qui permettra de réduire la pression au sol des pneumatiques du tracteur.

D'autres buts et avantages de la présente invention apparaîtront au cours de la description suivante qui n'est cependant donnée qu'à titre indicatif.

Selon l'invention, la machine de reprise de labour, qui trouvera son application dans le domaine agricole, apte à être attelée à un tracteur, pour assurer la préparation des sols aux semis, après l'hivernage ou non, en égalisant finement en surface le niveau de la terre sans pénétrer en profondeur ni provoquer de tassement, la dite machine comprenant:
- des outils de travail de la terre, présentant au moins un outil transversal tranchant égalisateur,
- des moyens de soutien des outils, qui déterminent le niveau moyen du sol dans la zone de travail des dits outils, se présentant sous la forme d'une armature et qui repose sur le sol, uniquement par sa partie avant et sa partie arrière,
- des moyens de réglage de la hauteur des outils par rapport au sol,
- des moyens de liaison souples reliant les dits moyens de soutien des dits outils au châssis du tracteur, afin d'autoriser une liberté de débattement vertical par rapport au tracteur et qui permet de suivre librement les aspérités du sol,
   est caractérisée par le fait que :
- la premier outil de travail du sol se présente en permanence sous la forme d'une lame transversale égalisatrice, concave et incurvée, anti-adhérente dont la hauteur de fixation est réglable sur les moyens de soutien, prévus pour trancher la surface du sol, émietter la terre et affleurer la surface du sol lors de l'avancement de la machine.

Dans une variante de la présente invention, la machine de reprise de labour est caractérisée par le fait qu'elle comporte au moins une seconde lame tranversale égalisatrice, concave et incurvée, anti-adhérente, qui tranche la surface du sol, émiette la terre, et affleure la surface du sol, prévue à l'arrière de la première lame, les arêtes inférieures des dites première et seconde lames étant décalées l'une par rapport à l'autre pour travailler le sol successivement.

Par ailleurs, selon une autre caractéristique de la présente invention, l'ensemble agraire de reprise de labour, comprenant un tracteur et une machine de reprise de labour, tels que repris ci-dessus, est caractérisé par le fait qu'il présente des moyens pour délester artificiellement l'ensemble des roues du tracteur aptes à créer au moins un report de charge des roues du tracteur sur la partie arrière des dits moyens de soutien.

L'invention sera mieux comprise à la lecture de la description suivante accompagnée de dessins en annexe parmi lesquels:
- la figure 1 schématise la machine de reprise de labour installée sur un tracteur à chenille, selon une première réalisation,
- la figure 2 illustre le fonctionnement de la machine de reprise de labour selon la présente invention,
- la figure 3 représente schématiquement la machine de reprise de labour selon une variante de la présente invention,
- la figure 4 illustre un détail des moyens de la machine représentée à la figure 3 et notamment la disposition relative des lames égalisatrices,
- la figure 5 représente un tracteur à roues équipé de la machine de reprise de labour, telle que représentée à la figure 2, mais dans une variante report de charge,
- la figure 6 représente en vue de dessus la machine de reprise de labour de la figure 5 installée sur un tracteur à roues.

La présente invention vise une machine de reprise de labour qui trouvera notamment son application dans le domaine agricole. Les développements techniques connus se sont orientés vers la mise au point d'outils puissants qui travaillent le sol en profondeur et qui malheureusement ne permettent pas de bénéficier de certaines actions naturelles.

La présente invention, notamment cherche à tirer avantage de l'action du gel sur le sol. La machine de reprise de labour est destinée à exercer son action directement sur un terrain labouré et son rôle est de provoquer seulement un nivelage du sol en surface, ceci afin de ne pas détruire les qualités acquises par l'action du gel. Le sol est préparé naturellement durant l'hiver et seul un nivellement est assuré avant la mise en place des semis.

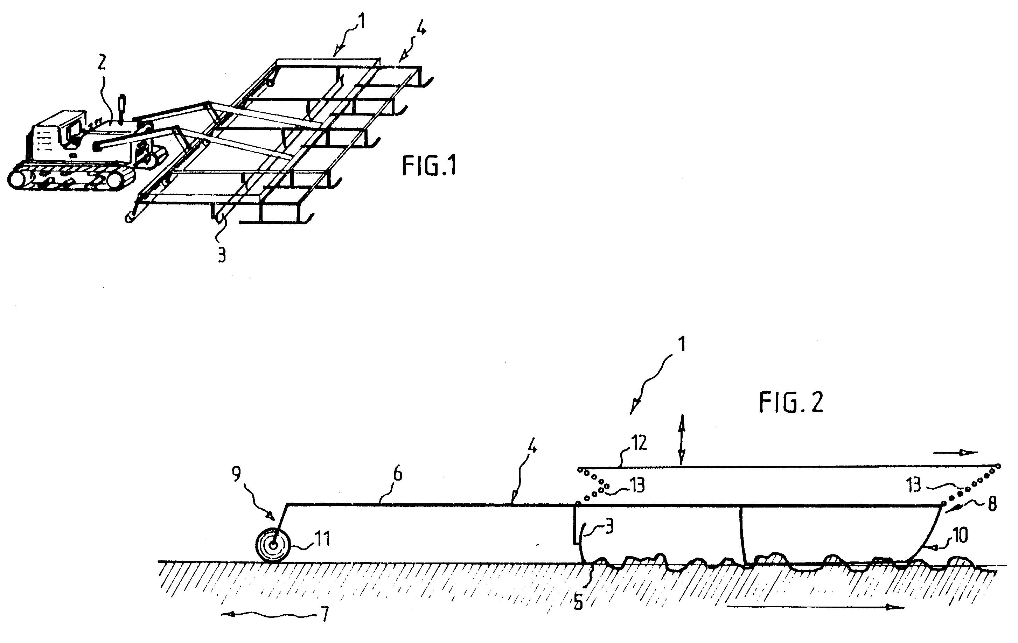

La figure 1 illustre la machine de reprise de labour 1 de la présente invention qui est destinée à être attelée à un tracteur 2. Afin de réduire le tassement du sol, il est avantageux d'utiliser un engin exerçant une très faible pression sur le sol. A ce titre, un engin monté sur chenilles, tel qu'illustré à la figure 1 est particulièrement bien adapté. En effet, la pression sous les chenilles peut être réduite jusqu'à environ 350 g/cm² c'est-à-dire une valeur de l'ordre de la moitié de celle obtenue par l'utilisation de roues.

Etant donné que l'action de la machine de la présente invention se limite à la surface du sol par une action de nivellement, la puissance absorbée est faible, ce qui permet d'envisager le travail sur une largeur conséquente de l'ordre de 10 m pour une puissance de 80 chevaux.

Pour égaliser finement la surface du sol, la machine 1 de reprise de labour de la présente invention comprend une lame 3 transversale qui affleure la surface du sol. Cette lame, incurvée et anti-adhérente permet de couper les têtes des grosses mottes de terre et de s'en servir pour combler les aspérités du sol afin de l'égaliser. Toute la difficulté est d'ajuster la hauteur de la lame égalisatrice 3 pour qu'elle effectue un nivellement de la surface du sol sans brasser inutilement la terre. Cet ajustement en hauteur doit être permanent pour tenir compte de la déclivité du sol, il ne doit toutefois pas être perturbé par des aspérités ou bosses locales.

A cet effet, la machine 1 de reprise de labour de la présente invention est constituée de moyens 4 de soutien de la dite lame égalisatrice 3 qui détermine le niveau moyen du sol dans la zone de travail de la lame 3.

La figure 2 illustre le fonctionnement de la machine de reprise de labour 1 de la présente invention. La hauteur de fixation de la lame 3 égalisatrice sur les moyens de soutien 4 est réglable. Il est souhaitable que l'action de cette lame 3 se limite à la surface du sol, toutefois, dans certaines circonstances notamment lorsqu'il y a des trous importants à combler, il est parfois nécessaire d'ajuster la lame pour qu'elle s'enforce modérément dans le sol.

L'action de la lame 3 doit se limiter à couper les têtes des grosses mottes de terre et à pousser les parties coupées à la surface du sol pour combler les trous. Pour que cette action se déroule dans de bonnes conditions, il est souhaitable que la lame présente une forme concave et que l'arête inférieure 5 de la lame 3 présente un bord tranchant. La lame sera réalisée dans un matériau présentant des propriétés d'anti-adhérence afin d'éviter le collage de la terre à sa surface. L'acier inoxydable convient parfaitement à cet usage.

Les moyens de soutien 4 de la lame 3 disposent d'une liberté de débattement vertical par rapport au tracteur qui leur permet de suivre librement la surface du sol.

Les moyens de soutien 4 se présentent sous la forme d'une armature 6 qui repose sur le sol 7 par sa partie avant 8 et arrière 9 et au centre de laquelle est fixée la lame égalisatrice 3. Le fait que l'armature 6 repose sur le sol en deux points avant et arrière fait que l'armature lorsqu'elle est suffisamment dimensionnée détermine un niveau moyen du sol. Généralement, une longeur supérieure à 2 m est requise en ce qui concerne l'armature pour déterminer un niveau moyen du sol correct.

L'armature 6 repose sur le sol 7 dans sa partie avant 8 par l'intermédiaire de patins 10. Les patins peuvent par exemple être répartis sur la partie avant de l'armature 6 et espacés d'environ 30 cm.

Dans sa partie arrière 9, l'armature repose sur le sol notamment par l'intermédiaire de roues, ou patins ou roto-herses 11.

La roto-herse est une sorte de petite cage d'écureuil qui n'est pas entrainée par la prise de force mais qui, du fait de son faible diamètre, a une vitesse de rotation élevée permettant un effet d'émiettement.

L'armature 6 est reliée au châssis 12 du tracteur par l'intermédiaire de moyens de liaisons souples 13 tels que des chaines. L'emploi de liaisons souples permet un libre débattement vertical de l'armature 6 tout en assurant son déplacement horizontal.

Par exemple avec l'emploi d'un engin à chenilles, la machine de reprise de labour de la présente inventin permet de travailler sur une très grande largeur ce qui réduit la proportion de zones tassées et de n'avoir qu'un tassement minimum au niveau des chenilles.

Les meilleurs résultats ont été obtenus en travaillant le sol avec une incidence de 45 ° par rapport à l'axe longitudinal des sillons du labour, mais il est possible de travailler en parallèle ou à la perpendiculaire.

L'exemple suivant est donné à titre indicatif sans pour cela limiter la portée de l'invention :
- installation à l'avant d'un tracteur à roues, ou mieux à chenilles, laissant le relevage arrière libre pour des herses portées ou tout autre outil.

Montage réalisé :
sur un tracteur à chenille pousseur de 85 CV
10 mètres de lames niveleuses en trois tronçons de trois mètres trente à l'avant à la place de la lame du pousseur
10 mètres de herses vibrantes type "DANOISE" à l'arrière résultat pour dix mètres de terrain nivelé un mètre soixante de zone tassée et seulement à 300 gr/cm².

Dans cet exemple, la lame 3 est formée en trois tronçons, toutefois on pourrait également envisager de réaliser des tronçons de lames indépendants ou articulés entre eux par élément de 1 à 4 mètres de large pour suivre parfaitement le terrain.

D'autres exemples de réalisation et applications pourront être envisagés par l'Homme du métier dans tous les cas de semis ou de plantation après labour hiverné ou non.

A ce sujet, on utilisera couramment la machine de reprise de labour attelée sur le relevage avant des tracteurs effectuant les semis ou les plantations.

D'autres mises en oeuvre de la présente invention pourrait être envisagées : en particulier, les patins avant de la machine pourraient parfaitement être remplacés par des dispositifs à cage d'écureuil ou autre, ce qui, dans certains cas, permet d'envisager un report d'une partie du poids du tracteur sur la machine.

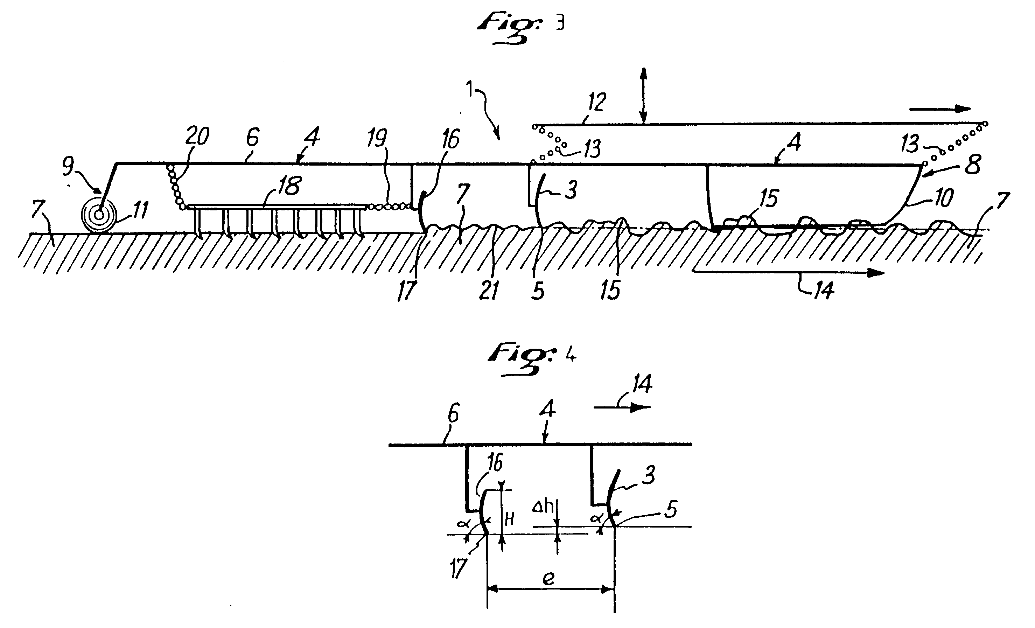

Les figures 3 et 4 concernent des perfectionnements apportés à la machine de reprise de labour telle que représentée aux figures 1 et 2, pour assurer la préparation du sol aux semis sur des terres hivernées ou non, ayant subi le gel ou non.

Ainsi, la réalisation de la présente invention équipée de ces perfectionnements permettra d'une part de travailler, pour ce qui est de la France, par exemple au printemps, une terre ayant subi le repos hivernal et l'action bénéfique du gel afin de préparer le terrain à l'ensemencement printanier.

D'autre part, selon les conditions climatiques françaises, la machine de l'invention permettra de travailler la terre après un labour automnal, non hiverné, afin d'autoriser la préparation et la réalisation d'un lit de semences traditionnel, ce en travaillant d'une manière fondamentalement différente des méthodes traditionnelles connues à ce jour.

La figure 3 montre la base de la machine de labour 1 telle que décrite précédemment.

Plus précisément, la machine 1 comprend au moins une première lame 3 transversale qui affleure la surface du sol. Cette lame est incurvée, de forme concave, anti-adhérente pour couper les têtes des mottes de terre et autoriser le nivellement des aspérités du sol, et réglable en hauteur, par des moyens non représentés sur les figures, à la portée de l'Homme de l'Art.

Cela étant, la machine 1 de reprise de labour comporte des moyens 4 de soutien de la dite première lame égalisatrice 3, qui déterminent le niveau moyen du sol dans la zone de travail de la lame 3, et que se présentent par exemple sous la forme d'une armature 6 qui repose sur le sol 7 par sa partie avant 8 et arrière 9, la dite première lame égalisatrice 3 étant fixée entre les patins 10 et les roues, patins ou roto-herses 11 ou similaires.

L'armature 6 est reliée au châssis du tracteur, schématisé en 12 dans la figure, par l'intermédiaire de moyens de liaison souples 13, tels que des chaines, permettant un libre débattement vertical de l'armature tout en assurant son déplacement horizontal.

Il est à noter que la machine de la présente invention peut être soit poussée soit tirée par le tracteur, le sens d'avancement de la machine étant repéré par la flèche 14 de la figure.

De telles dispositions permettent à la dite première lame égalisatrice 3, par l'intermediaire de son arête inférieure 5 et son bord tranchant, de couper les têtes des grosses mottes de terre 15 sans entrer trop profondément dans le sol proprement dit.

Pour compléter l'action de cette première lame, notamment dans le cas d'un travail sur un labour non hiverné, la machine 1 de la présente invention comporte avantageusement une seconde lame 16, transversale, égalisatrice, incurvée et anti-adhérente, prévue à l'arrière de la dite première lame 3. Ainsi, la première lame permet un travail sur les grosses mottes de terre, sans chercher à réaliser un travail fin au niveau du nivellement, et la seconde lame réalise un travail successif et tranche une deuxième fois la surface du sol préalablement préparé par la lame 3.

Autrement dit, comme l'illustre la figure 3, la première lame 3 réalise un pré-nivellement en coupant les grosses mottes 15 et en nivelant grossièrement le terrain puis la seconde lame 16 réalise un nivellement fin en coupant ainsi formée et en répartissant la terre émiettée dans les creux du terrain.

La seconde lame 16 est de forme similaire à la première lame 3 c'est-à-dire qu'elle présente une forme concave et une arête inférieure 17 équipée d'un bord tranchant. Ces lames seront réalisées dans un matériau présentant des propriétés d'anti-adhérence afin d'éviter le collage de la terre à sa surface, par exemple en acier inoxydable.

La seconde lame 16 sera équipée également de moyens de réglage de la hauteur par rapport à l'armature 6 et supportée par les dits moyens de soutien 4 entre les points d'appui 8 et 9. En outre, la dite arête 17 inférieure de la seconde lame 16 sera disposée plus basse, par rapport au sol que celle 5 de la dite première lame 3.

La figure 4 montre précisément ce détail et on a représenté pa "Δh"la différence de hauteur entre le bord tranchant 5 de la première lame 3 et le bord tranchant 17 de la seconde lame 16. De par les moyens de réglage séparés des deux lames 3 et 16 on règlera cet écart "Δh" de 0 à 10 cm selon les terrains. A titre d'exemple, un écart "Δh" de l'orde de 2 à 3 cm a donné de bons résultats.

Par ailleurs, l'espacement "e" entre les dites première et seconde lames 3, 16 est réglable, selon les configurations de terrain de 30 cm jusqu'à 1 m 50. L'ensemble de lames 3, 16 étant placé dans la partie médiane entre les appuis 8 et 10 de l'armature 6. De bons résultats ont été notés en prévoyant un espacement "e", de l'ordre de 50 à 100 cm.

Cela étant, pour compléter l'effet d'émiettement des deux lames transversales égalisatrices 3, 16, la machine 1 de la présente invention comporte avantageusement des herses 18 prévues à l'arrière des lames égalisatrices qui complèteront l'action de ces dernières et prépareront un lit de semence.

A cet effet, on utilisera des herses du type à dents rigides et/ou vibrantes de type "danoise".

Les dites herses 18 sont attelées et reliées au bâti armature 6 de la machine par une ou plusieurs liaisons tel que le montre la figure 1 afin d'assurer un montage flottant des herses et contrôler leur profondeur de pénétration dans le sol sans qu'elle ne soit excessive.

Dans le mode de réalisation représenté à la figure 3, les herses sont notamment attelées par une chaine 19 derrière la deuxième lame 16 et reliées au bâti 6 par l'intermédiaire d'une seconde chaine 20. Une telle disposition permettra également d'assurer leur relevage lorsqu'elles ne seront pas utilisées.

La machine de reprise de labour telle que décrite précédemment est entièrement placée à l'avant de l'engin propulseur. Ainsi, on peut réaliser derrière le semis directement après un tel travail de la terre.

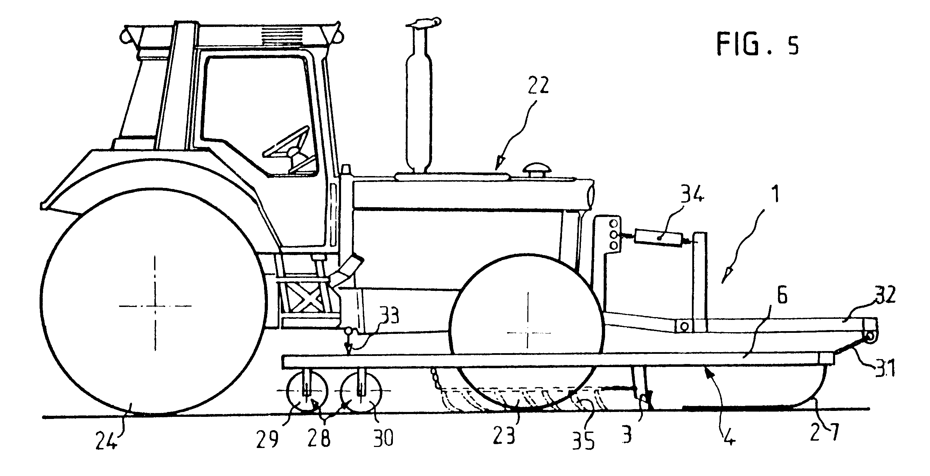

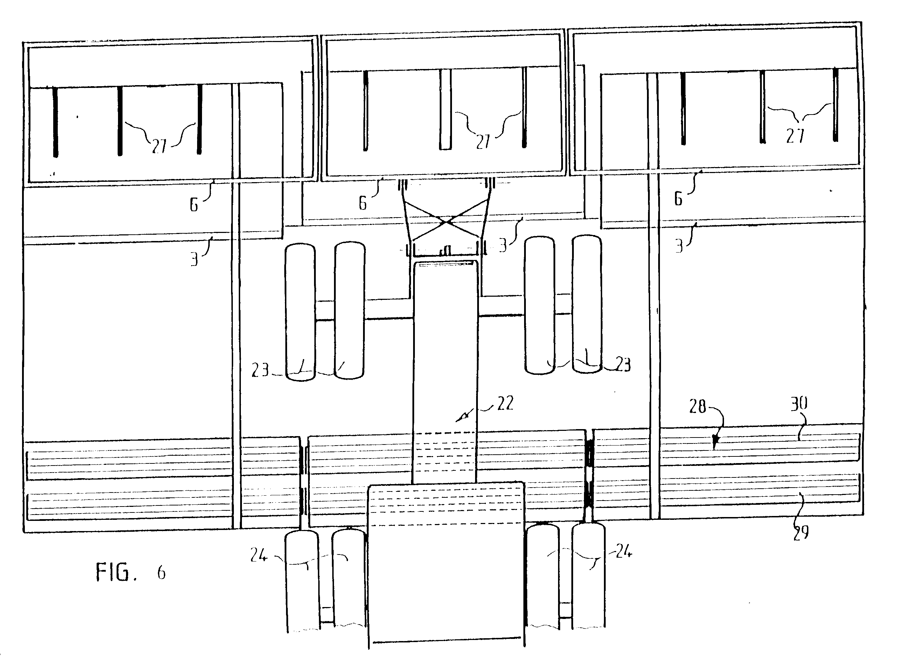

Un engin à chenilles, tel qu'illustré à la fiture 1, peut être utilisé mais n'est pas largement répandu dans les exploitations agricoles. Par contre, l'utilisation de tracteur à roues est plus courante et, c'est dans ces conditions que le perfectionnement objet des figures 5 et 6 a été développé.

Ainsi, la propulsion de la machine de reprise de labour 1 est assurée par un tracteur à roues 22 tel qu'illustré à la figure 5. Il s'agit d'un tracteur de type conventionnel dont la puissance peut par exemple se situer aux environs de 80 à 150 chevaux.

Comme cela est visible à la figure 6, le tracteur 22 utilise, de préférence, des roues avant 23 et arrière 24 jumelées.

L'écartement entre les roues jumelées 23 et 24 sera de préférence déterminé de telle sorte qu'il corresponde à l'écartement entre les lignes de culture, par exemple 0,45 m. Les roues avant et arrière du tracteur 22 seront également de préférence alignées pour ne créer qu'une seule trace qui sera condamnée pour l'ensemencement en raison du tassement occasionné.

La machine de reprise de labour 1 est sensiblement identique à celle décrite précédemment. Elle comporte une armature 6 de soutien d'une lame égalisatrice transversale 3, des patins avant 27 déterminent la garde au sol de l'armature, et une roto-herse 28 à simple ou double cages 29 et 30 est placée à l'arrière de l'armature 6 pour d'une part déterminer un niveau moyen du sol en combinaison avec les patins 27 et d'autre part assurer un émiettement et un tassement de la terre propice au semoir.

Selon l'invention, la machine de reprise de labour 1 de la présente invention présente des moyens pour délester artificiellement l'ensemble des roues 23 et 24 du tracteur 22. Cette propriété est obtenue sans action néfaste sur la qualité du travail de la machine 1. Au contraire, les avantages de ce délestage sont multiples. En premier lieu le point d'application de ce délestage étant au centre du tracteur, l'ensemble des roues de ce dernier est concerné.

Deuxièmement, ce délestage se rapporte sur toute la largeur de terrain travaillé qui peut aller jusqu'à 8 m ou plus, il peut donc être important si nécessaire.

Troisièmement, l'action de légère compaction du sol qu'il occasionne est tout à fait nécessaire dans la plupart des cas.

Enfin, ce transfert de charge étant réglable depuis le poste de conduite, il est possible de l'adapter aux conditions variables rencontrées sur le terrain.

Les moyens de délestage de la présente invention permettent d'effectuer un report de la charge des roues 23 et 24 du tracteur sur la roto-herse 28.

La charge supplémentaire qui en résulte sur la roto-herse n'est pas préjudiciable à son fonctionnement, bien au contraire elle est nécessaire. En raison de sa grande largeur, la pression supplémentaire qui en résulte demeure très acceptable et favorise même son action à faible profondeur.

Les moyens de délestage se présentent sous la forme d'une liaison souple 31 placée entre l'avant de l'armature 6 et le châssis supérieur 32 du tracteur 22, ainsi, que d'une liaison élastique, schématisée à la figure 1 par une flèche 33, qui relie le bâti du tracteur 22 et l'arrière de l'armature 6 de la machine 1.

Cette liaison élastique peut être notamment réalisée par des vérins à double effets, alimentés sous pression variable à partir du circuit hydraulique du tracteur, prenant appui d'une part sur le bâti du tracteur et d'autre part sur un palonnier de répartition des charges sur les roto-herses, selon des techniques traditionnelles.

La liaison souple 31 assure l'entrainement de l'armature 6 sans qu'aucune contrainte verticale ne lui soit appliquée.

Une disposition particulière de l'outillage de la machine de reprise de labour 1 est adoptée pour permettre les reports de charge. En particulier, l'armature 6 est disposée partiellement sous le châssis du tracteur 22 de telle sorte que la roto-herse 28 soit placée entre les roues avant 23 et l'arrière 24 du tracteur 22. La liaison élastique 33 qui s'applique sur l'armature 6 à la verticale de la roto-herse 28 se présente par exemple sous la forme d'un vérin à large débattement. Il est en effet essential que l'armature 6 puisse suivre les aspérités du terrain librement. Le tracteur 22 ne doit pas provoquer l'enforcement de la roto-herse 28 dans le sol. On place, par exemple, des vérins de part et d'autre du tracteur 22 de telle sorte que l'on équilibre le charge appliquée sur l'armature 6. Le report de charge est au maximum d'une tonne à 1,5 tonne de part et d'autre du tracteur. Au total, il est possible ainsi de diminuer de 30 % la pression au sol exercée par les roues du tracteur 22.

La liaison élastique 33 peut également se présenter sous la forme d'une suspension à accumulateur hydropneumatique à vessie comme cela se rencontre sur le matériel agricole. Ainsi, la pression appliquée par le tracteur 22 sur l'armature 6 est sensiblement constante et indépendante des aspects du terrain.

La lame égalisatrice 3 et les parties 27 sont placées à l'avant du tracteur 22.

On peut noter que cette disposition laisse l'arrière du tracteur 22 entièrement libre pour par exemple placer un semoir traditionnel ou de précision. De la sorte, l'ensemble des opérations peut être réalisé en un seul passage. Il est intéressant de niveler, ameublir, et "rappuyer" la terre en une seule opération car on évite ainsi les risques de pluie qui pourraient survenir en cas d'opérations successives indépendantes.

La largeur de la machine de reprise de labour 1 peut aller jusqu'à une dizaine de mètres. Il est par conséquent souhaitable de fractionner sa fabrication transversalement pour diminuer les risques de porte-à-faux et suivre plus facilement les terrains vallonnés. Pour cela, l'armature, dans l'exemple choisi de la figure 6, est divisée en trois parties articulées entre elles. Ceci permet également de replier les côtés pour faciliter la circulation dans les chemins et sur les routes.

Le relevage de la machine de reprise de labour 1 a été envisagé. Pour cela, on utilise un montage standard classique de relevage avant 34 de tracteur équipé de bras inférieurs munis de vérins hydrauliques qui provoque la rotation du châssis 32 et le soulèvement de l'armature 6 par l'intermédiaire de la chaine 11. La partie arrière de l'armature est manoeuvrée à l'aide des vérins 33 qui provoquent le relèvement de l'armature 5.

Afin de créer un délestage équilibré des roues avant 23 et arrière 24 du tracteur 22, de préférence, on positionne la roto-herse 28 sensiblement sous le centre de gravité du tracteur 22.

D'autres mises en oeuvre de la présente invention auraient également pu être envisagées, ainsi pour étendre les conditions d'application de la machine de reprise de la présente invention, on prévoira la possibilité de fixer des éléments de herse 35 directement derrière les lames égalisatrices telles que décrites en regard de la figure 3. Cette adjonction peut par exemple permettre de remédier en partie à l'absence d'action du gel sur la structure du sol.

## Revendications

1. Machine de reprise de labour, qui trouvera son application dans le domaine agricole, apte à être attelée à un tracteur, pour assurer la préparation des sols aux semis, après l'hivernage ou non, en égalisant finement en surface le niveau de la terre sans pénétrer en profondeur ni provoquer de tassement, la dite machine (1) comprenant :
- des outils (3; 3,16; 3,35; 3,16,18) de travail de la terre, présentant au moins un outil transversal tranchant égalisateur (3),
- des moyens de soutien (4) des outils, qui déterminent le niveau moyen du sol (7) dans la zone de travail des dits outils, se présentant sous la forme d'une armature (6) et qui repose sur le sol (7), uniquement par sa partie avant (8; 27) et sa partie arrière (9; 28),
- des moyens de réglage de la hauteur des outils par rapport au sol,
- des moyens de liaison (13) souples reliant les dits moyens de soutien (4) des dits outils au châssis du tracteur, afin d'autoriser une liberté de débattement vertical par rapport au tracteur et qui permet de suivre librement les aspérités du sol (7),
caractérisée par le fait que :
- le premier outil de travail du sol se présente en permanence sous la forme d'une lame (3) transversale égalisatrice, concave et incurvée, anti-adhérente dont la hauteur de fixation est réglable sur les moyens (4) de soutien, prévus pour trancher la surface du sol, émietter la terre et affleurer la surface du sol (7) lors de l'avancement de la machine.

2. Machine de reprise de labour selon la revendication 1, caractérisée par le fait qu'elle comporte au moins une seconde lame (16) transversale égalisatrice, concave et incurvée, anti-adhérente, qui tranche la surface du sol, émiette la terre, et affleure la surface du sol, prévue à l'arrière de la première lame (3), les arêtes inférieures (5, 17) des dites première et seconde lames (3, 16) étant décalées l'une par rapport à l'autre pour travailler le sol successivement.

3. Machine de reprise de labour selon la revendication 1, caractérisée par le fait que la dite arête inférieure (17) de la seconde lame (16) est plus basse, par rapport au sol, que celle (5) de la dite première lame (3).

4. Machine de reprise de labour selon les revendications 1 ou 2, destinée à être tractée ou poussée par un tracteur, caractérisée par le fait que la ou les dites lames (3, 16) sont fixées au centre de la dite armature (6).

5. Machine de reprise de labour selon la revendication 4, caractérisée par le fait que l'armature (6) repose sur le sol dans sa partie avant (8) par l'intermédiaire de patins (10) et/ou repose sur le sol (7) dans sa partie arrière (9) par l'intermédiaire de roto-herses (11), et/ou est reliée au châssis (12) du tracteur par des chaînes (13).

6. Machine de reprise de labour selon la revendication 4, caractérisée par le fait que la longueur de l'armature (6) est supérieure à 2m.

7. Machine de reprise de labour selon les revendications 1 ou 2, caractérisée par le fait que la ou les dites lames (3, 16) présentent un bord inférieur (5, 17) tranchant.

8. Machine de reprise de labour selon la revendication 3, caractérisée par le fait que l'écart entre les dites arêtes est (5, 17) réglable de 0 à 10 cm et/ou l'espacement des dites première (3) et seconde (16) lames est réglable de 30 cm à 1 m 50.

9. Machine de reprise de labour selon la revendication 1, caractérisée par le fait que la dite première lame (3) est suivie d'une succession de lames complémentaires.

10. Machine de reprise de labour selon la revendication 2, caractérisée par le fait que la hauteur de la deuxième lame (16) est égale ou inférieure à celle de la première lame (3) et que le rayon de courbure des dites lames (3, 16) est tel que l'on attaque la sol avec un même angle.

11. Machine de reprise de labour selon les revendications 1 ou 2, caractérisée par le fait qu'elle comporte des herses (18) dont la profondeur d'action est contrôlée prévues à l'arrière des lames égalisatrices (3, 16) du type à dentes rigides et/ou vibrantes.

12. Ensemble agraire de reprise de labour, comprenant un tracteur (22) et une machine de reprise de labour (1), selon la revendication 1, caractérisé par le fait qu'il présente des moyens (33) pour délester artificiellement l'ensemble des roues (23 et 24) du tracteur (22) aptes à créer au moins un report de charge des roues (23 et 24) du tracteur (22) sur la partie arrière (9; 28) des dites moyens de soutien (4, 6)

13. Ensemble agraire de reprise de labour selon la revendication 12, caractérisé par le fait que les moyens de délestage se présentent sous la forme d'une liaison souple (31) entre le châssis du tracteur (22) et l'avant de l'armature (6) de soutien et d'une liaison élastique (33) entre le centre du châssis du tracteur (22) et l'arrière de l'armature de soutien (6).

14. Ensemble agraire de reprise de labour selon la revendication 13, caractérisé par le fait que l'armature de soutien (6) est disposée partiellement sous le châssis du tracteur (22) de telle sorte que la partie arrière (9; 28) des dits moyens de soutien (4, 6) soit placée entre les roues avant (23) et arrière (24) du tracteur (22).

15. Ensemble agraire de reprise de labour selon la revendication 12, caractérisé par le fait que les patins (10; 27) et la ou les lames égalisatrices transversales (3, 16) sont placés devant le tracteur (22).

16. Ensemble agraire de reprise de labour selon la revendication 13, caractérisé par le fait que la liaison élastique (33) se présente sous la forme d'un vérin à large débattement ou d'une suspension à accumulateur hydropneumatique à vessie.

17. Ensemble agraire de reprise de labour selon la revendication 13, caractérisé par le fait que le centre de gravité du tracteur (22) est sensiblement placé à l'aplomb de la roto-herse (28; 30).

## Claims

1. Post-ploughing machine which will find an application in the field of agriculture, suitable for coupling to a tractor, for preparing the soil for sowing, following final ploughing before winter or otherwise, by finely evening out the level of the earth on the surface, without penetrating deeply or causing packing, the said machine (1) including:
- soil working tools (3; 3, 16; 3, 35; 3, 16, 18), having at least one transverse cutting and levelling tool (3);
- means (4) for supporting the tools, which determine the mean level of the soil (7) in the work area of the said tools, taking the form of a framework (6) only the front portion (8; 27) and rear portion (9; 28) of which rest on the soil (7);
- means for adjusting the height of the tools in relation to the soil;
- flexible connecting means (13) connecting the said means (4) for supporting the said tools to the chassis of the tractor, in order to permit freedom of vertical travel in relation to the tractor and which make it possible to follow freely the uneven surface of the soil (7);
characterized by the fact that:
- the first soil working tool permanently takes the form of a transverse concave, incurved, non-adhering levelling blade (3) the fixing height of which can be adjusted on the support means (4), provided for cutting into the surface of the soil, breaking up the earth and grazing the surface of the soil (7) as the machine advances.

2. Post-ploughing machine according to claim 1, characterized by the fact that it comprises at least a second transverse concave, incurved, non-adhering levelling blade (16) which cuts into the surface of the soil, breaks up the earth and grazes the surface of the soil, provided to the rear of the first blade (3), the lower edges (5, 17) of the said first and second blades (3, 16) being offset in relation relation to one another for working the soil successively.

3. Post-ploughing machine according to claim 1, characterized by the fact that the said lower edge (17) of the second blade (16) is lower, in relation to the soil, than that (5) of the said first blade (3).

4. Post-ploughing machine according to claims 1 or 2, designed to be drawn or pushed by a tractor, characterized by the fact that the said blade or blades (3, 16) are fixed in the centre of the said framework (6).

5. Post-ploughing machine according to claim 4, characterized by the fact that the framework (6) rests on the soil in its front portion (8) through the intermediary of skids (10) and/or rests on the soil (7) in its rear portion (9) through the intermediary of rotary harrows (11), and/or is connected to the chassis (12) of the tractor by chains (13).

6. Post-ploughing machine according to claim 4, characterized by the fact that the length of the framework (6) is greater than 2 m.

7. Post-ploughing machine according to claim 1 or 2, characterized by the fact that the said blade or blades (3, 16) have a cutting lower edge (5, 17).

8. Post-ploughing machine according to claim 3, characterized by the fact that the distance between the said edges (5, 17) is adjustable from 0 to 10 cm and/or the spacing of the said first (3) and second (16) blades is adjustable from 30 cm to 1 m 50.

9. Post-ploughing machine according to claim 1, characterized by the fact that the said first blade (3) is followed by a succession of complementary blades.

10. Post-ploughing machine according to claim 2, characterized by the fact that the height of the second blade (16) is equal to or less than that of the first blade (3) and that the radius of curvature of the said blades (3, 16) is such that the soil is engaged at the same angle.

11. Post-ploughing machine according to claim 1 or 2, characterized by the fact that it comprises harrows (18) the working depth of which is controlled, provided to the rear of the levelling blades (3, 16), of the rigid and/or vibrating prong type.

12. Post-ploughing agricultural assembly including a tractor (22) and a post-ploughing machine (1), according to claim 1, characterized by the fact that it has means (33) for artificially unburdening all of the wheels (23 and 24) of the tractor (22), suitable for causing at least a transfer of the load on the wheels (23 and 24) of the tractor (22) to the rear portion (9; 28) of the said supporting means (4, 6).

13. Post-ploughing agricultural assembly according to claim 12, characterized by the fact that the lightening means take the form of a flexible connection (31) between the chassis of the tractor (22) and the front of the supporting framework (6), and of an elastic connection (33) between the centre of the chassis of the tractor (22) and the rear of the supporting framework (6).

14. Post-ploughing agricultural assembly according to claim 13, characterized by the fact that the supporting framework (6) is disposed partially underneath the chassis of the tractor (22) so that the rear portion (9; 28) of the said supporting means (4, 6) is placed between the front (23) and rear (24) wheels of the tractor (22).

15. Post-ploughing agricultural assembly according to claim 12, characterized by the fact that the skids (10; 27) and the transverse levelling blade or blades (3, 16) are placed ahead of the tractor (22).

16. Post-ploughing agricultural assembly according to claim 13, characterized by the fact that the elastic connection (33) takes the form of a jack with a long travel distance or of a bladder type hydropneumatic accumulator suspension.

17. Post-ploughing agricultural assembly according to claim 13, characterized by the fact that the centre of gravity of the tractor (22) is placed substantially vertically above the rotary harrow (28; 30).

## Patentansprüche

1. Ackerfräse, die ihre Anwendung auf dem Gebiet der Landwirtschaft finden wird und geeignet ist, an einen Schlepper gekuppelt zu werden, um die Aufbereitung der Böden für das Besäen, vor der Winterzeit oder nicht, dadurch zu sichern, daß die Bodenhöhe oberflächig feinplaniert wird, ohne tief einzudringen oder eine Senkung zu bewirken, wobei die genannte Maschine (1) umfaßt:
- Bodenbearbeitungswerkzeuge (3; 3, 16; 3, 35; 3, 16, 18), die wenigstens ein querverlaufendes, schneidendes Planierwerkzeug (3) umfaßt,
- Werkzeugabstützmittel (4), die die durchschnittliche Bodenhöhe (7) im Arbeitsbereich der genannten Werkzeuge bestimmen und als ein Rahmen ausgestaltet sind, der nur über dessen Vorderteil (8; 27) und dessen Hinterteil (9; 28) auf dem Boden (7) ruht,
- Höheneinstellmittel für die Werkzeuge bezüglich des Bodens,
- biegsame Verbindungsmittel (13), die die genannten Abstützmittel (4) der genannten Werkzeuge mit dem Unterbau des Schleppers verbinden, um eine senkrechte Bewegungsfreiheit bezüglich des Schleppers zu erlauben, die es gestattet, die Unebenheiten des Bodens (7) zu folgen,
dadurch gekennzeichnet, daß:
- das erste Bodenbearbeitungswerkzeug ständig als ein hohlgewölbtes und inwärts gekrümmtes, nichtanhaftendes, querverlaufendes Planiermesser (3) ausgestaltet ist, dessen Befestigungshöhe auf den vorgesehenen Abstützmitteln (4) einstellbar ist, um bei der Vorwärtsbewegung der Maschine die Bodenoberfläche zu zerschneiden, den Boden zu zerbröckeln und die Bodenoberfläche (7) auszugleichen.

2. Ackerfräse nach Anspruch 1, dadurch gekennzeichnet, daß sie wenigstens ein zweites, hinter dem ersten Messer vorgesehenes, hohlgewölbtes und inwärts gekrümmtes, nichtanhaftendes Planier-Quermesser (16) umfaßt, das die Bodenoberfläche zerschneidet, den Boden zerbröckelt und die Bodenoberfläche ausgleicht, wobei die Unterkanten (5, 17) der genannten ersten und zweiten Messer (3, 16) zu einander versetzt sind, um den Boden aufeinanderfolgend zu bearbeiten.

3. Ackerfräse nach Anspruch 1, dadurch gekennzeichnet, daß die genannte Unterkante (17) des zweiten Messers (16) auf dem Boden bezogen niedriger ist als diejenige (5) des genannten ersten Messers (3).

4. Ackerfräse nach Anspruch 1 oder 2, die dazu bestimmt ist, von einem Schlepper geschleppt oder getrieben zu werden, dadurch gekennzeichnet, daß das oder die genannten Messer (3, 16) in der Mitte des genannten Rahmens (6) befestigt sind.

5. Ackerfräse nach Anspruch 4, dadurch gekennzeichnet, daß der Rahmen (6) an dessen Vorderteil (8) über Gleitschienen (10) auf dem Boden ruht und/oder an dessen Hinterteil (9) über Dreheggen (11) auf dem Boden ruht und/oder über Ketten (13) mit dem Unterbau (12) des Schleppers verbunden ist.

6. Ackerfräse nach Anspruch 4, dadurch gekennzeichnet, daß die Länge des Rahmens (6) 2 m überschreitet.

7. Ackerfräse nach Anspruch 1 oder 2, dadurch gekennzeichnet, daß das oder die genannte Messer (3, 16) einen schneidenden Unterrand (5, 17) aufweisen.

8. Ackerfräse nach Anspruch 3, dadurch gekennzeichnet, daß der Abstand zwischen den genannten Kanten (5, 17) von 0 bis 10 cm und/oder der Abstand zwischen den genannten ersten (3) und zweiten (16) Messern von 30 cm bis 1,50 m einstellbar ist.

9. Ackerfräse nach Anspruch 1, dadurch gekennzeichnet, daß an das genannte erste Messer (4) eine Reihe von zusätzlichen Messern anschliessen.

10. Ackerfräse nach Anspruch 2, dadurch gekennzeichnet, daß die Höhe des Zweiten Messers (16) gleich derjenigen oder geringer als diejenige des ersten Messers (3) und der Krümmungsradius der genannten Messer (3, 16) derartig ist, daß der Boden mit einen selben Winkel angeschnitten wird.

11. Ackerfräse nach Anspruch 1 oder 2, dadurch gekennzeichnet, daß sie an der Hinterseite der Planiermesser (3, 16) vorgesehene Eggen (18) der Art mit starren und/oder vibrierenden Zähnen umfaßt, deren Wirkungstiefe kontrolliert ist.

12. Ackerfräseinheit, umfsassend einen Schlepper (22) und eine Ackerfräse (1) nach Anspruch 1, dadurch gekennzeichnet, daß sie Mittel (33) umfaßt, um die sämtlichen Räder (23 und 24) des Schleppers (22) künstlich vom toten Gewicht zu befreien, die geeignet sind, wenigstens eine Lastübertragung von den Rädern (23 und 24) des Schleppers (22) auf den Hinterteil (9; 28) der genannten Abstützmittel (4, 6) zu bewirken.

13. Ackerfräseinheit nach Anspruch 12, dadurch gekennzeichnet, daß die Mittel zum Befreien vom toten Gewicht als eine biegsame Verbindung (31) zwischen dem Unterbau des Schleppers (22) und dem Vorterteil des Abstützrahmens (6) und eine elastische Verbindung (33) zwischen der Mitte des Unterbaus des Schleppers (22) und dem Hinterteil des Abstützrahmens (6) ausgestaltet sind.

14. Ackerfräseinheit nach Anspruch 12, dadurch gekennzeichnet, daß der Abstützrahmen (6) zum Teil so unterhalb des Unterbaus des Schleppers (22) angeordnet ist, daß der Hinterteil (9; 28) der genannten Abstützmittel (4, 6) zwischen den Vorder- (23) und den Hinterrädern (24) des Schleppers (22) angeordnet sind.

15. Ackerfräseinheit nach Anspruch 12, dadurch gekennzeichnet, daß die Gleitschienen (10; 27) und das oder die querverlaufenden Planiermesser (3) vor dem Schlepper (22) angeordnet sind.

16. Ackerfräseinheit nach Anspruch 13, dadurch gekennzeichnet, daß die elastische Verbindung (33) als ein großhubiger Hebebock oder eine Federung mit Druckwasserblasenspeicher mit Luftbelastung ausgestaltet ist.

17. Ackerfräseinheit nach Anspruch 13, dadurch gekennzeichnet, daß der Schwerpunkt des Schleppers (22) sich im wesentlichen lotrecht zur Drehegge (28; 30) befindet.
